# EUROPÄISCHE PATENTANMELDUNG

(11) **EP 4 471 213 A1**
(43) Veröffentlichungstag der Anmeldung: **04.12.2024**
(21) Anmeldenummer: 24178827.2
(22) Anmeldetag: 29.05.2024
(51) Int. Cl.: E01C 19/48, E01C 19/42

(54) **GLEITSCHALUNGSFERTIGER**

(30) Priorität: 30.05.2023 DE 102023114147
(71) Anmelder: Wirtgen GmbH, 53578 Windhagen (DE)
(72) Erfinder: Verhaelen, Philip, 53797 Lohmar (DE); Engels, Michael, 56410 Montabaur (DE); Scholl, Christian, 66484 Dietrichingen (DE); Ramseger, Gunnar, 57614 Borod (DE)
(74) Vertreter: dompatent von Kreisler Selting Werner - Partnerschaft von Patent- und Rechtsanwälten mbB

(57) **Zusammenfassung**

Bei einem Gleitschalungsfertiger (1), mit
- zumindest einem Maschinenrahmen (2),
- zumindest drei Fahreinrichtungen (4), die mit dem Maschinenrahmen (2) verbunden sind,
- zumindest einer Fördereinrichtung (6), die mit dem Maschinenrahmen (2) derart verbunden ist, dass die Fördereinrichtung (6) relativ zu dem Maschinenrahmen (2) zumindest um eine horizontale Achse und zumindest um eine vertikale Achse schwenkbar,
- zumindest ein erster Aktuator (22), der derart angeordnet und ausgebildet ist, dass die Fördereinrichtung (6) zumindest um die horizontale Achse schwenkbar istund
- zumindest ein zweiter Aktuator (24, 34), der derart angeordnet und ausgebildet ist, dass die Fördereinrichtung (6) zumindest um die vertikale Achse schwenkbar ist,
- wobei die Fördereinrichtung (6) mittels zumindest des ersten und zweiten Aktuators (22, 24, 34, 18) in einem in Bezug zu dem Maschinenrahmen (2) definierten Bewegungsraum (40) bewegbar ist,

ist vorgesehen, dass zumindest eine Steuereinrichtung (62) vorgesehen ist, die dazu ausgebildet ist, zumindest einen ersten Kollisionsbereich (60) in dem Bewegungsraum (40) zu definieren,
wobei die Steuereinrichtung (62) ferner dazu ausgebildet ist, die Position der Fördereinrichtung (6) in Bezug zu dem Kollisionsbereich (60) zu bestimmen.

## Beschreibung

Die Erfindung betrifft einen Gleitschalungsfertiger nach Anspruch 1, sowie ein Verfahren zum Herstellen von Bodenbelägen oder Strukturen mit Hilfe von Gleitschalungsfertigern nach Anspruch 13.

Es sind Gleitschalungsfertiger insbesondere aus der DE 199 57 048 bekannt, die zumindest einen Maschinenrahmen, Fahreinrichtungen, die mit dem Maschinenrahmen verbunden sind und zumindest eine Fördereinrichtung aufweisen. Mittels der Fördereinrichtung kann z.B. Beton zu einer Arbeitseinrichtung transportiert werden. Mittels der Arbeitseinrichtung können Bodenbeläge oder Strukturen hergestellt werden. Die Arbeitseinrichtung kann beispielsweise eine Betonmulde sein. Die Arbeitseinrichtung kann austauschbar und auch in der Position veränderbar oder verbreitert werden. Die Fahreinrichtungen können derart mit dem Maschinenrahmen verbunden sein, dass sie ihre Position bezogen auf den Maschinenrahmen verändern können.

Die Fördereinrichtung kann mit dem Maschinenrahmen derart verbunden sein, dass die Fördereinrichtung relativ zu dem Maschinenrahmen zumindest um eine horizontale Achse und zumindest um eine vertikale Achse schwenkbar, sowie vorzugsweise in zumindest eine erste Richtung translatorisch bewegbar ist. Aktuatoren können die Fördereinrichtung um die entsprechenden Achsen und ggf. in die entsprechende Richtung bewegen. Die Fördereinrichtung ist mittels der Aktuatoren in einem in Bezug zu dem Maschinenrahmen definierten Bewegungsraum bewegbar.

Die Fördereinrichtung weist einen Materialaufnahmebereich zur Aufnahme von Beton auf. Der Beton wird dann über die Fördereinrichtung zur Arbeitseinrichtung, insbesondere zur Betonmulde transportiert mit der der Bodenbelag oder die Struktur hergestellt wird.

Bei den bekannten Gleitschalungsfertigern besteht häufig das Problem, dass der Bediener sowohl den Gleitschalungsfertiger als solchen als auch die zu dem Gleitschalungsfertiger gehörige Fördereinrichtung steuern muss, mit der das Material gefördert wird, das in die Betonmulde eingebracht wird. Es besteht somit zunehmend Bedarf, die Bedienung der Fördereinrichtung zu vereinfachen.

Aufgabe der vorliegenden Erfindung ist es daher, einen Gleitschalungsfertiger und ein Verfahren zum Herstellen von Bodenbelägen oder Strukturen mit Hilfe von Gleitschalungsfertigen zu schaffen, die bzw. das die Bedienung des gesamten Gleitschalungsfertigers, insbesondere die Bedienung der Fördereinrichtung vereinfacht.

Die Erfindung sieht in vorteilhafter Weise vor, dass zumindest eine Steuereinrichtung vorgesehen ist, die dazu ausgebildet ist, zumindest einen ersten Kollisionsbereich in dem Bewegungsraum der Fördereinrichtung zu definieren, wobei die Steuereinrichtung ferner dazu ausgebildet ist, die Position der Fördereinrichtung in Bezug zu dem Kollisionsbereich zu bestimmen.

Der Bewegungsraum ist der Raum bezogen auf den Maschinenrahmen, in dem sich die Fördereinrichtung theoretisch bewegen kann und wird zwangsläufig durch die Ausgestaltung der Fördereinrichtung und der Aktuatoren, die diese Fördereinrichtung bewegen, bestimmt. Gemäß der vorliegenden Erfindung ist zumindest ein erster Aktuator vorgesehen, der derart angeordnet und ausgebildet ist, dass die Fördereinrichtung zumindest um die horizontale Achse schwenkbar ist. Ferner ist ein zweiter Aktuator vorgesehen, der derart angeordnet und ausgebildet ist, dass die Fördereinrichtung zumindest um die vertikale Achse schwenkbar ist.

Da die Fördereinrichtung mittels der Aktuatoren flexibel im Bewegungsraum bewegt und positioniert werden kann, kann zuverlässig Material zu der Arbeitseinrichtung mittels der Fördereinrichtung transportiert werden. Sowohl die Aufnahmestelle, an der das Material auf die Fördereinrichtung übergeben wird, als auch die Position, an der das Material an die Arbeitseinrichtung übergeben wird sind dabei flexibel.

Es kann auch zumindest ein dritter Aktuator vorgesehen sein, der derart angeordnet und ausgebildet ist, dass die Fördereinrichtung zumindest in die erste Richtung translatorisch bewegbar ist.

Der Kollisionsbereich ist ein Bereich innerhalb des Bewegungsraums. Der Kollisionsbereich ist ein Bereich, in den sich die Fördereinrichtung nicht bewegen soll. Dieser Bereich kann beispielsweise ein Bereich sein, in dem es zu einer Kollision der Fördereinrichtung mit zumindest einem Gegenstand kommen kann. Der Gegenstand kann beispielsweise ein Teil des Gleitschalungsfertigers, wie z.B. eine Fahreinrichtung sein. In diesem Fall würde sich der Gegenstand tatsächlich in dem Kollisionsbereich befinden. Andererseits kann dies auch eine theoretische Gefahr einer Kollision mit einem Gegenstand sein. Beispielsweise könnte auf einer Fahrbahn ein innerhalb des Bewegungsraums befindlicher Bereich sein, in dem Fahrzeuge, z.B. Baustellenfahrzeuge oder auch andere Gegenstände, bewegt werden können. In diesem Fall kann ein bestimmter Kollisionsbereich definiert werden, in dem es theoretisch zu einer Kollision kommen kann.

Die Position der Fördereinrichtung im Bewegungsraum, insbesondere die Position der Fördereinrichtung in Bezug zu dem Kollisionsbereich kann aufgrund der Verstellposition der Aktuatoren bestimmbar sein. Die Steuereinrichtung kann dazu ausgebildet sein, ein Steuersignal auszugeben, sobald mittels der Steuereinrichtung festgestellt wird, dass die Fördereinrichtung einen vorgegebenen Abstand zu dem Kollisionsbereich unterschreitet.

Die Position der Fördereinrichtung im Bewegungsraum kann beispielsweise mittels an den Aktuatoren angeordneten Sensoren erfolgen. Die Sensoren könne beispielsweise in den Aktuatoren integriert angeordnet oder separat von diesen angeordnet sein. Integrierten Sensoren können beispielsweise Wegmesszylinder sein. Separat angeordnete Sensoren können beispielsweise Seilzugsensoren sein.

Alternativ oder zusätzlich kann auch eine Sensorik in der Form einer 3D-Kamera oder Abstandssensoren die beispielsweise an dem Maschinenrahmen angeordnet sein können, zur Erfassung der Position vorgesehen sein.

Es können auch weitere Aktuatoren als der zumindest eine erste, der zumindest eine zweite und der zumindest eine dritte Aktuator vorgesehen sein. Sind zusätzliche Aktuatoren vorgesehen, so ist der Bewegungsraum der Raum in dem die Fördereinrichtung durch Bewegen der ersten, zweiten, dritten und weiteren Aktuatoren bewegt werden kann. Hierbei ist nicht ausgeschlossen, dass auch mehr als ein weiterer Aktuator vorgesehen sein kann. Zur Definition des Bewegungsraums sind alle Freiheitsgrade der Fördereinrichtung und damit alle an der Verstellung beteiligten Aktuatoren zu berücksichtigen.

Das Steuersignal kann ein Stoppsignal zum Stoppen zumindest eines Aktuators und/oder ein Steuersignal zur Ausgabe eines akustischen und/oder eines optischen Warnsignals sein. Es könnten auch beispielsweise mehrere unterschiedliche Steuersignale ausgegeben werden. Hierzu können unterschiedliche Abstände vorgegeben werden und unterschiedliche Steuersignale abhängig vom ermittelten Abstand ausgegeben werden.

So könnte beispielsweise in einer Stufe bei einem bestimmten ersten Abstand eine Warnung in Form eines akustischen und/oder optischen Signals ausgegeben werden. In einer zweiten Stufe bei einem zweiten vorgegebenen Abstand, der vorzugsweise kleiner als der erste vorgegebene Abstand ist, kann dann ein Stoppsignal zum Stoppen des zumindest einen Aktuators ausgegeben werden.

Im Kollisionsbereich kann zumindest ein Teil des Maschinenrahmen und/oder zumindest ein Teil eines Fahrwerks angeordnet sein.

Der Maschinenrahmen kann derart ausgebildet sein, dass durch Hinzufügen und/oder Wegnehmen von Baugruppen die Struktur des Maschinenrahmens veränderbar ist. Alternativ oder zusätzlich kann der Maschinenrahmen auch derart ausgebildet sein, dass Teile davon, insbesondere die Fahrwerke verstellbar sind, so dass die Struktur des Maschinenrahmens veränderbar ist.

Dadurch kann es auch nötig sein, den Kollisionsbereich anzupassen.

Die Steuereinrichtung kann dazu ausgebildet sein, den in dem Bewegungsraum definierten Kollisionsbereich anzupassen, wobei die Anpassung manuell oder automatisch durchführbar ist.

Die Steuereinrichtung kann dazu ausgebildet sein, den Kollisionsbereich dann anzupassen, wenn sich die Position und/oder die Struktur zumindest eines Fahrwerks und/oder sich die Struktur des Maschinenrahmens ändert. Wenn sich das Fahrwerk und/oder die Struktur des Maschinenrahmens in dem Bereich des Bewegungsraums der Fördereinrichtung befindet, kann es theoretisch zu einer Kollision kommen. Gemäß der vorliegenden Erfindung kann ein Kollisionsbereich definiert werden, der innerhalb des Bewegungsraums liegt. Es kann verhindert werden, dass die Fördereinrichtung sich in diesen Kollisionsbereich hineinbewegt. Dadurch, dass die Position und die Struktur des Fahrwerks oder die Struktur des Maschinenrahmens sich ändern können, kann es nötig sein, dass der Kollisionsbereich angepasst wird. Der Kollisionsbereich des Gleitschalungsfertigers kann manuell oder automatisch angepasst werden. Bei einer automatischen Anpassung kann der Kollisionsbereich beispielsweise immer dann automatisch angepasst werden, wenn sich die Position und Struktur des Fahrwerks in Bezug zu dem Maschinenrahmen verändert. Die Position und Struktur kann beispielsweise automatisch mittels Sensoren erfasst werden. Alternativ können beispielsweise die Eingabebefehle für eine Verstelleinrichtung erfasst werden, die beispielsweise die Fahrwerke in Bezug zu dem Maschinenrahmen verschwenken kann.

In einer Speichereinrichtung kann gespeichert sein, welche Baugruppe des Maschinenrahmens hinzufügbar bzw. wegnehmbar sind, so dass die verschiedenen Strukturen des Maschinenrahmens in der Speichereinrichtung speicherbar sind, wobei durch Auswahl der unterschiedlichen Strukturen des Maschinenrahmens aus der Speichereinrichtung der Kollisionsbereich anpassbar ist.

Baugruppen können beispielsweise unterschiedlichen oder erweiterbare Arbeitseinrichtungen, insbesondere Betonmulden sein. Für unterschiedliche Arbeitseinrichtungen, insbesondere Betonmulden können beispielsweise unterschiedliche Konfigurationen und damit unterschiedliche Kollisionsbereiche gespeichert sein. Unter verschieden Konfigurationen können beispielsweise unterschiedliche Maschinenkonfigurationen verstanden werden. Wenn eine Maschine eine andere Konfiguration aufweist, kann sie beispielsweise eine andere Arbeitseinrichtung, z.B. eine andere Betonmulde, aufweisen, oder die Laufwerke können relativ zum Maschinenrahmen unterschiedlich positioniert sein. Es kann beispielsweise durch den Bediener die gerade in Verwendung befindliche Arbeitseinrichtung, insbesondere Betonmulde mit einer Eingabeeinrichtung ausgewählt werden und der Kollisionsbereich kann entsprechend angepasst werden

Es kann auch vorgesehen sein, dass die Arbeitseinrichtungen, insbesondere Betonmulden selbst einen auslesbaren Identifikator tragen (Barcode / RFID usw.) der bei der Montage der Arbeitseinrichtung, insbesondere Betonmulde an der Maschine ausgelesen werden kann. Dann muss keine manuelle Auswahl der verwendeten Arbeitseinrichtung durch den Bediener erfolgen.

Die Informationen zur Baugruppe können insbesondere Länge / Höhe / Breite der Baugruppe und den Montagepunkt enthalten.

In der Speichereinrichtung können für unterschiedliche Anwendungen des Gleitschalungsfertigers unterschiedliche Konfigurationen und damit unterschiedliche Kollisionsbereiche gespeichert sein, wobei durch Auswahl der unterschiedlichen Anwendungen der Kollisionsbereich anpassbar ist. Bei unterschiedlichen Anwendungen können beispielsweise unterschiedliche Strukturen von Maschinenrahmen verwendet werden, so dass einfach durch Auswahl der Anwendung der Kollisionsbereich automatisch anpassbar ist.

Die Steuereinrichtung kann dazu ausgebildet sein, die überschneiden Bereiche von dem Bewegungsraum des Förderbandes und des Raums, den der Maschinenrahmen und die Fahrwerke einnehmen, zu ermitteln, um den Kollisionsbereich festzulegen und/oder den Kollisionsbereich anzupassen.

Dabei kann die Ermittlung des überschneiden Bereichs initial am Anfang eines Bearbeitungsvorgangs festgelegt werden und danach der Kollisionsbereich manuell oder automatisch, wie oben beschrieben, angepasst werden.

Nicht nur die Fahrwerke können bewegliche Teile der Maschine sein. Auch kann beispielsweise die Arbeitseinrichtung, z.B. eine Betonmulde, als beweglicher Teil der Maschine ausgebildet sein. Auch andere Teile der Maschine können als bewegliche Teile der Maschine ausgebildet sein. Aufgrund der beweglichen Teile kann sich der Kollisionsbereich verändern.

Alternativ kann die Steuerung auch während des Arbeitsbetriebs erneut eine Überprüfung des überschneiden Bereichs durchführen. Alternativ kann die Steuereinrichtung auch dazu ausgebildet sein, den als Kollisionsbereich festlegbaren überschneidenden Bereich bei Bewegung der Fahrwerke oder anderer Teile der Maschine automatisch anzupassen. Dies bedeutet, dass der überschneidende Bereich kontinuierlich ermittelt wird. Eine kontinuierliche Ermittlung kann beispielsweise mit Sensoren erfolgen.

Es können beispielsweise Sensoren vorgesehen sein, die die Position der Fahrwerke und des Maschinenrahmens oder auch andere Gegenstände erfasst und Signale an die Steuereinrichtung sendet und die Steuereinrichtung davon abhängig einen Kollisionsbereich definiert bzw. einen sich zeitlich ändernden Kollisionsbereich definiert. Es ist dabei entscheidend, dass die Sensordaten zur Bestimmung des Kollisionsbereichs herangezogen werden.

Alternativ kann eine solche Erfassung mit Sensoren einmalig zu Beginn eines Bearbeitungsprozesses erfolgen. Zusätzlich kann dann während des Bearbeitungsprozesses die geänderte Position der Fahreinrichtungen und/oder des Maschinenrahmens durch die geänderten vorgegebenen Steuereingaben, wie Lenkeingaben, angepasst werden.

Gemäß der vorliegenden Erfindung kann ein Verfahren zum Herstellen von Bodenbelägen oder Strukturen mit Hilfe von Gleitschalungsfertigern vorgesehen sein, der zumindest einen Maschinenrahmen aufweist, mit dem zumindest eine Fördereinrichtung verbunden ist, wobei die Fördereinrichtung relativ zu dem Maschinenrahmen zumindest um eine horizontale Achse und zumindest um eine vertikale Achse geschwenkt werden kann. wobei zumindest ein erster Aktuator die Fördereinrichtung zumindest um die horizontale Achse schwenken kann und zumindest ein zweiter Aktuator die Fördereinrichtung zumindest um die vertikale Achse schwenken kann, wobei die Fördereinrichtung mittels zumindest des ersten und zweiten Aktuators in einem in Bezug zu dem Maschinenrahmen definierten Bewegungsraum bewegbar ist. Gemäß der vorliegenden Erfindung kann vorgesehen sein, dass zumindest ein erster Kollisionsbereich mittels einer Steuereinrichtung in dem Bewegungsraum definiert wird, und wobei mittels der Steuereinrichtung die Position der Fördereinrichtung in Bezug zu den Kollisionsbereich bestimmt wird.

Auch kann vorgesehen sein, dass die Fördereinrichtung relativ zu dem Maschinenrahmen in zumindest eine erste Richtung translatorisch bewegt werden kann und zumindest ein dritter Aktuator die Fördereinrichtung zumindest in die erste Richtung translatorisch bewegen kann, wobei die Fördereinrichtung mittels zumindest des ersten und zweiten und optional auch dritten Aktuators in einem in Bezug zu dem Maschinenrahmen definierten Bewegungsraum bewegbar sein kann.

Die Position der Fördereinrichtung kann in Bezug zu dem Kollisionsbereich aufgrund der Verstellposition der Aktuatoren bestimmt werden.

Die Steuereinrichtung kann ein Steuersignal ausgeben, sobald die Fördereinrichtung einen vorgegebenen Abstand zum dem Kollisionsbereich unterschreitet.

Das Steuersignal kann ein Stoppsignal zum Stoppen zumindest eines Aktuators und/oder ein Steuersignal zur Ausgabe eines akustischen und/oder optischen Warnsignals sein. Der in dem Bewegungsraum definierte Kollisionsbereich kann manuell und/oder automatisch angepasst werden.

Der Kollisionsbereich kann angepasst werden, wenn sich die Position und/oder die Struktur zumindest eines Fahrwerks und/oder sich die Struktur des Maschinenrahmens ändert.

Im Folgenden wird unter Bezugnahme auf die Zeichnungen ein Ausführungsbeispiel der vorliegenden Erfindung näher erläutert.

Es zeigen schematisch:
- Fig. 1: eine Draufsicht auf einen Gleitschalungsfertiger,
- Fig. 2: eine perspektive Ansicht einer Fördereinrichtung,
- Fig. 3: eine Seitenansicht der Fördereinrichtung als Fig. 2,
- Fig. 4.: die Fördereinrichtung aus Fig 3 in ausgefahrenem Transportband,
- Fig. 5: eine Fördereinrichtung gemäß Fig. 3 in verstellter Position,
- Fig. 6: eine Fördereinrichtung gemäß Fig. 4 in Draufsicht und zur Besseren Darstellung ohne Transportband, und
- Fig. 7: eine weitere Ansicht von unten auf die Fördereinrichtung gemäß Fig. 6,
- Fig. 8: eine Steuereinrichtung.

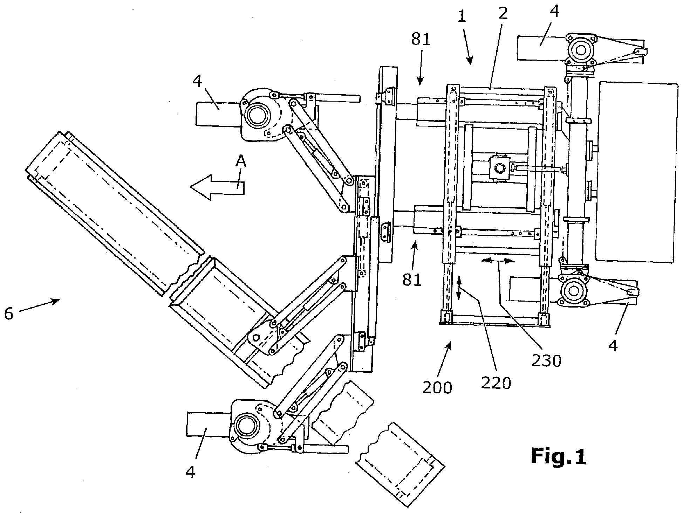

Fig. 1 zeigt einen Gleitschalungsfertiger 1. Mit einem Gleitschalungsfertiger können Bodenbeläge oder Strukturen hergestellt werden. Der Gleitschalungsfertiger 1 kann sich in Arbeitsrichtung A bewegen.

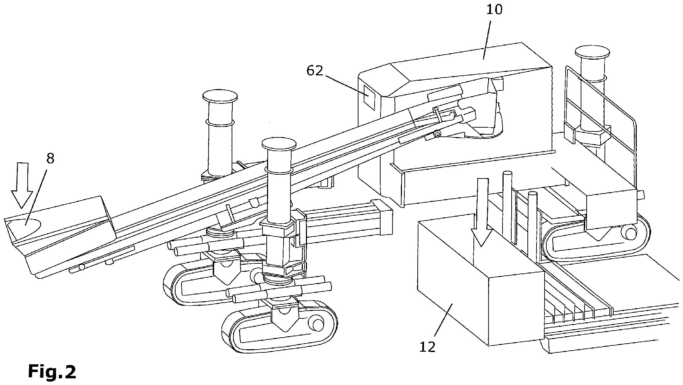

Der Gleitschalungsfertiger 1 weist zumindest einen Maschinenrahmen 2 auf. Mit dem Maschinenrahmen 2 sind Fahreinrichtungen 4 verbunden. Ferner ist zumindest eine Fördereinrichtung 6 vorgesehen. Mittels der Fördereinrichtung 6 kann z.B. Beton zu einer Arbeitseinrichtung 12 (Fig. 2) transportiert werden. Mittels der Arbeitseinrichtung können Bodenbeläge oder Strukturen hergestellt werden. Die Arbeitseinrichtung kann beispielsweise eine Betonmulde sein. Die Arbeitseinrichtung kann austauschbar und auch in der Position veränderbar oder verbreitert werden. Die Fahreinrichtungen 4 können derart mit dem Maschinenrahmen verbunden sein, dass sie ihre Position bezogen auf den Maschinenrahmen verändern können.

In Fig.1 ist ein Gleitschalungsfertiger 1 dargestellt, bei dem die Längsträger 81 des Maschinenrahmens 2 längenveränderlich sind. Ferner weist der Maschinenrahmen 2 auch eine Maschinenrahmenteil 200 auf, der in Längsrichtung 230 und Querrichtung 220 längenveränderlich ist. An diesen Maschinenrahmenteil 200 können verschiede Arbeitseinrichtung 12, z.B. verschieden geformte Betonmulden, angebracht werden. Mit Hilfe des Maschinenrahmenteils 200 können diese unterschiedlich positioniert werden.

Die Fördereinrichtung 6 kann mit dem Maschinenrahmen 2 derart verbunden sein, dass die Fördereinrichtung 6 relativ zu dem Maschinenrahmen zumindest um eine horizontale Achse und zumindest um eine vertikale Achse verschwenkbar. Auch kann, wie im Ausführungsbeispiel dargestellt die Fördereinrichtung 6 relativ zu dem Maschinenrahmen in zumindest eine erste Richtung translatorisch bewegbar sein.

Mit Hilfe der Fördereinrichtung 6 kann Material aufgenommen werden und in die Arbeitseinrichtung 12 befördert werden, mit der die Fahrbahn oder Strukturen hergestellt werden.

In Fig. 2 ist die Fördereinrichtung 6 genauer dargestellt, bei der das Material an der Seite 8 aufgenommen wird und an der Seite 10 in die als Betonmulde ausgebildete Arbeitseinrichtung 12 eingebracht wird.

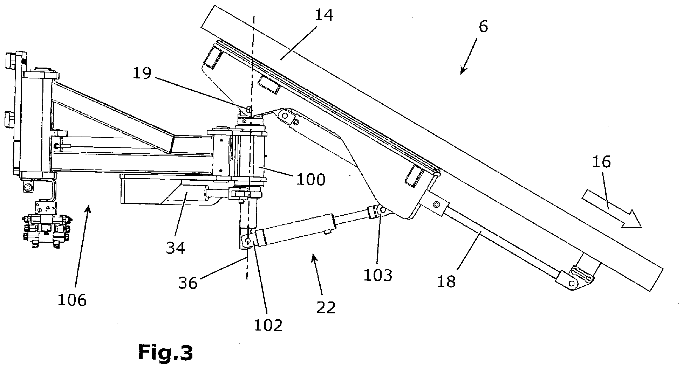

In Fig. 3 ist die Fördereinrichtung 6 näher dargestellt. Die Fördereinrichtung 6 weist ein Förderband 14 auf, das in Fig. 3 gezeigt ist. Das Förderband 14 und damit die Fördereinrichtung 6 kann mit Hilfe zumindest eines ersten Aktuators 22 um eine horizontale Schwenkachse 19 verschwenkt werden. Ferner kann die Fördereinrichtung 6 mit Hilfe eines zweiten Aktuators 34 um eine vertikale Schwenkachse 36 verschwenkt werden. Weiter kann die Fördereinrichtung 6 auch mit Hilfe eines dritten Aktuators 18 in zumindest eine erste Richtung 16 translatorisch bewegbar sein. Dabei kann das Förderband 14, je nach Ausführungsform, entweder als Ganzes in die erste translatorische Richtung 16 bewegt werden oder lediglich ein Ende des Förderbandes 14, wodurch das Förderband verlängert werden kann. Alternativ könnte auch beides möglich sein.

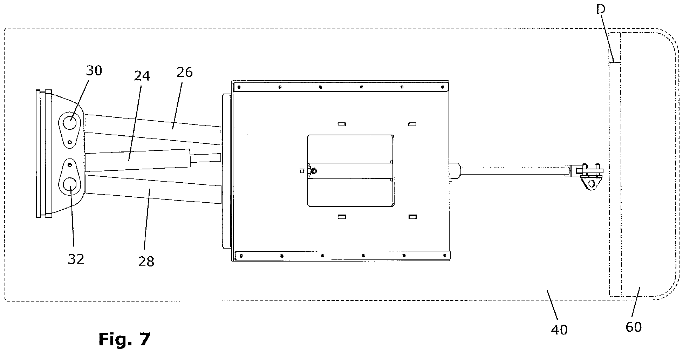

Ferner ist die Fördereinrichtung 6 an einer Parallelogrammführung 106 angeordnet, mit der die gesamte Fördereinrichtung 6 mit Hilfe eines weiteren in Figur 3 nicht dargestellten Aktuators 24 verstellen werden kann. Dies wird bezüglich Figur 7 noch näher erläutert. Die Parallelogrammführung 106 ist an dem Maschinenrahmen 2 angeordnet

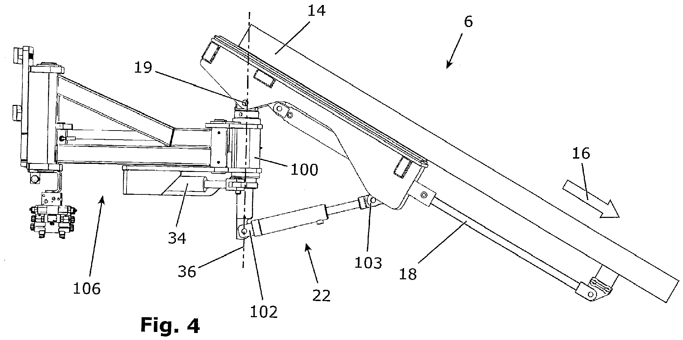

Fig. 4 zeigt das Ausführungsbeispiel nach Fig. 3 mit in translatorischer Richtung 16 bewegtem Förderband, bei dem das Förderband als Ganzes in die translatorische Richtung 16 bewegt worden ist.

In Fig.4 ist ferner der zumindest erster Aktuator 22 dargestellt, der die Fördereinrichtung 6 um die Schwenkachse 19 verschwenken kann, wobei die Achse 19 vorzugsweise eine horizontale Achse ist. Die Schwenkachs 19 ist dabei vorzugsweise unterhalb des Förderbandes 14 angeordnet. Die Schwenkachse 19 kann wie im Ausführungsbeispiel dargestellt im oberen Drittel der Fördereinrichtung 6 angeordnet sein. In einer weiteren bevorzugten Ausführungsform kann die Schwenkachse 19 im Bereich des mittleren Drittels der Fördereinrichtung 6 angeordnet sein. Der dargestellte erste Aktuator 22 ist im dargestellten Ausführungsbeispiel an einem Verbindungselement 100 um eine Schwenkachse 102 schwenkbar gelagert. Das Verbindungselement 100 ist an einer Parallelogrammführung 106 angeordnet. Der erste Aktuator 22 ist ferner an einem zweiten Ende um eine Schenkachse 103 schwenkbar mit der Fördereinrichtung 6 verbunden. Die Fördereinrichtung kann auch in entlang der Achse 36 manuell oder mithilfe eines weiteren Aktuators translatorisch beweglich sein.

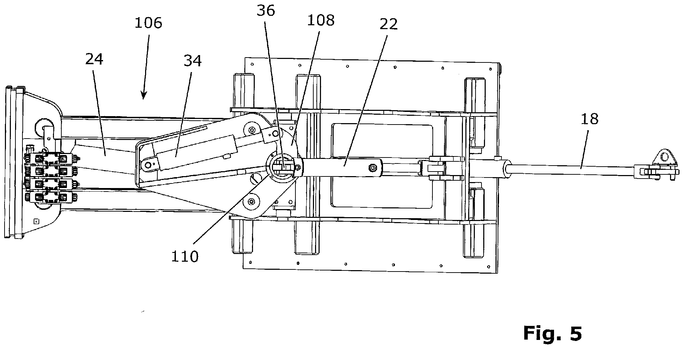

In Fig. 5 ist eine Ansicht des Ausführungsbeispiels von unten. Das Förderband ist allerdings der Übersichtlichkeit halber nicht dargestellt. In der Ansicht ist der zumindest eine erste Aktuator 22, der zumindest eine zweite Aktuator 34 und der zumindest eine dritte Aktuator 18 zu erkennen. Der zweite Aktuator 34 kann die Fördereinrichtung 6 um die vertikale Schwenkachse 36 verschwenken. Die Schwenkachse 36 schneidet vorzugsweise das Förderband. Ferner kann die Schwenkachse 36 durch die Schwenkachse 19 verlaufen. Dies kann auch Figur 4 entnommen werden. Der zweite Aktuator ist im dargestellten Ausführungsbeispiel an einem ersten Ende mit der Parallelogrammführung 106 verbunden. An einem zweiten Ende ist der zweite Aktuator 34 mit einem Verbindungslenker 108 schwenkbar verbunden, der wiederum mit einer Hohlsäule 110 verbunden ist, die mit der Fördereinrichtung 6 verbunden ist. Durch Betätigen und Aus bzw. Einfahren des zweiten Aktuators 34 kann die Hohlsäule 110 und damit die Fördereinrichtung 6 um die Schwenkachse 36 verschwenkt werden.

Ferner ist der Figur 5 auch ein optionaler weitere Aktuator 24 dargestellt. Mit dem kann die gesamte Fördereinrichtung 6 mit der Parallelogrammführung 106 verstellt werden. Die Parallelogrammführung 106 ist an dem Maschinenrahmen 2 angeordnet.

Weist die Maschine den optionalen weiteren Aktuator 24 und die Parallelogrammführung 106 nicht auf kann die Achse 36 auch am Maschinenrahmen gelagert sein Da die Fördereinrichtung zumindest mittels der Aktuatoren 22, 18, 34, 24 flexibel im Bewegungsraum bewegt und positioniert werden kann, kann zuverlässig Material zu der Arbeitseinrichtung mittels der Fördereinrichtung 6 transportiert werden. Die Aufnahmestelle, an der das Material auf die Fördereinrichtung 6 übergeben wird, ist dabei flexibel als auch die Position, wo das Material an die Arbeitseinrichtung 12 übergeben wird,

Horizontal im Sinne der vorliegenden Erfindung bedeutet nicht zwangsläufig horizontal in Bezug zu der Bodenoberfläche, aber horizontal zu einer durch die Längs- und Querachse des Maschinenrahmens definierte Ebene.

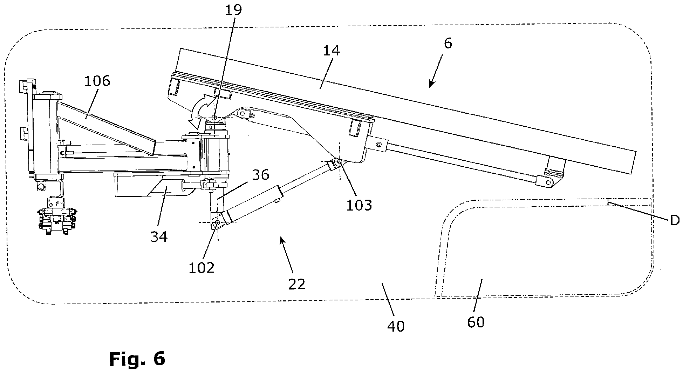

Fig. 6 zeigt die Fördereinrichtung wie in Fig. 4, allerdings in verstellter Position. In Fig. 6 ist der zumindest erster Aktuator 22 gegenüber Fig.4 verstellt worden. In Fig. 6 ist ferner ein Bewegungsraum 40 dargestellt. Dabei ist der Bewegungsraum 40 der Raum, in dem die Fördereinrichtung 6 durch Bewegen der zumindest ersten, zweiten und dritten Aktuatoren bewegt werden kann. Es ist somit der Raum, in dem sich die Fördereinrichtung 4 theoretisch bewegen kann. Der Bewegungsraum 40 wird in Bezug zu dem Maschinenrahmen definiert. Wenn sich der Gleitschalungsfertiger und somit der Maschinenrahmen vorwärtsbewegen, wird sich damit auch der Bewegungsraum 40 vorwärtsbewegen. Der Bewegungsraum 40 wird zwangsläufig durch die Ausgestaltung der Fördereinrichtung und der Aktuatoren, die diese Fördereinrichtung bewegen, bestimmt. In Fig. 6 ist nur der Bewegungsraum in der Seitenansicht dargestellt.

Nunmehr kann ein Kollisionsbereich 60 in dem Bewegungsraum definierbar sein. Der Kollisionsbereich 60 ist ein Bereich innerhalb des Bewegungsraums 40, in den sich die Fördereinrichtung 6 möglichst nicht bewegen soll. Dieser Kollisionsbereich 60 kann beispielsweise ein Bereich sein, in dem es zu einer Kollision der Fördereinrichtung 6 mit dem Maschinenrahmen 2 oder einer Fahreinrichtung 4 oder zumindest irgendeinem anderen Gegenstand kommen kann.

Fig. 7 zeigt eine Draufsicht auf die Fördereinrichtung 6, allerdings ist zur Übersichtlichkeit kein Förderband 14 dargestellt. In dieser Draufsicht ist der optionale weitere Aktuator 24 dargestellt. Der weitere Aktuator 24 kann die gesamte Fördereinrichtung 6 parallel verschwenken. Im vorliegenden Ausführungsbeispiel verschwenkt der optionale weitere Aktuator 24 die Fördereinrichtung mit Hilfe der Parallelgrammführung 106. In Fig. 7 sind dabei die beiden Lenker 26 und 28 dargestellt, die jeweils um eine Drehachse 30 und 32 verschwenken.

In Fig. 7 ist der Bewegungsraum 40 und der Kollisionsbereich 60 in der Draufsicht dargestellt. Der Bewegungsraum 40 und der Kollisionsraum sind jedoch nur in einer bestimmten horizontalen Ebene dargestellt. Die räumliche Ausdehnung des Kollisonsraums 60 und 40 außerhalb dieser Ebene kann in dieser Draufsicht nicht dargestellt werden.

Die Fördereinrichtung 6 kann mittels des zumindest einen ersten 22, zumindest einen zweiten 34 und zumindest einen dritten Aktuator 18 in Bezug zu dem Maschinenrahmen 2 definierten Bewegungsraum 40 bewegt werden. Auch kann optional, wie im Ausführungsbeispiel dargestellt, die Fördereinrichtung 6 mittels des zumindest einen dritten Aktuator 18 in Bezug zu dem Maschinenrahmen 2 definierten Bewegungsraum 40 bewegt werden. Der Bewegungsraum 40 ist in Fign. 6 und 7 dargestellt. Sind zusätzliche Aktuatoren vorgesehen, wie beispielsweise der weitere Aktuator 24, so ist der Bewegungsraum 40 der Raum in dem die Fördereinrichtung 6 durch Bewegen der ersten 22, zweiten 34, dritten 18 und weiteren Aktuator 24 bewegt werden kann. Hierbei sei nicht ausgeschlossen, dass auch mehr als ein weiterer Aktuator vorgesehen sein kann. Zur Definition des Bewegungsraums sind alle Freiheitsgrade der Fördereinrichtung und damit alle an der Verstellung beteiligten Aktuatoren zu berücksichtigen.

Ferner ist auch der Kollisionsbereich 60 in den Bewegungsraum 40 dargestellt. Der Kollisionsbereich 60 ist der Bereich innerhalb des Bewegungsraums 40, in den sich die Fördereinrichtung 6 möglichst nicht bewegen soll. Dieser Kollisionsbereich 60 kann beispielsweise ein Bereich sein, in dem es zu einer Kollision der Fördereinrichtung 6 mit dem Maschinenrahmen 2 oder einer Fahreinrichtung 4 oder zumindest irgendeinem anderen Gegenstand kommen kann. Allgemein definiert der Kollisionsbereich einen Teilbereich des Bewegungsraums, in den hinein eine Bewegung der Fördereinrichtung 6 nicht erfolgen soll.

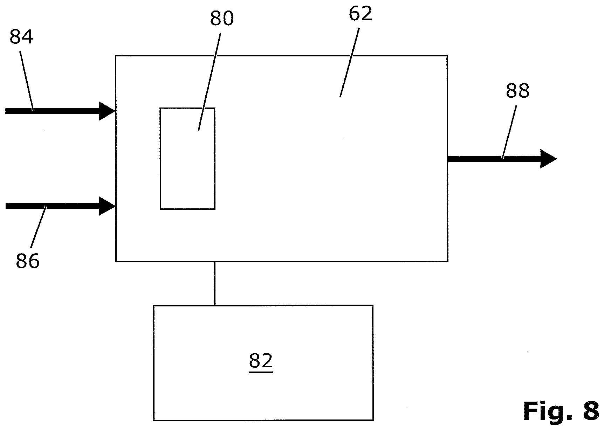

In Fig. 8 ist eine Steuereinrichtung 62 näher dargestellt. Die Steuereinrichtung 62 ist dazu ausgebildet, zumindest einen ersten Kollisionsbereich 60 in dem Bewegungsraum 40 zu definieren, wobei die Steuereinrichtung 62 ferner dazu ausgebildet ist, die Position der Fördereinrichtung 6 in Bezug zu dem Kollisionsbereich 60 zu bestimmen.

Die dargestellt Steuereinrichtung 62 weist vorzugsweise eine Speichereinrichtung 80 auf, in der der Bewegungsraum 40 und der Kollisionsbereich 60 speicherbar ist. Ferner kann die Steuereinrichtung 62 mit einer Eingabeeinrichtung 82 verbunden sein, über die beispielsweise die Maschinenkonfiguration eingegeben werden kann und/oder der zumindest eine Kollisionsbereich 60 und/oder die Eingaben für die Aktuatoren eingegeben werden können. Auch können Sensorsignale 84 an die Steuereinrichtung 62 gesendet werden. Die Sensorsignale 84 können beispielsweise die Positionssignale der Fördereinrichtung 6 sein. Auch können weitere Sensorsignale 86 an die Steuereinrichtung 62 gesendet werden. Die weiteren Sensorsignale 86 können die Sensorsignale bezüglich der Position und/oder Größe der Arbeitseinrichtung und/oder Fahreinrichtungen 4 sein. Die Steuereinrichtung 62 kann wenigstens ein Steuersignal 88 ausgeben, das unten näher beschrieben wird.

Die Steuereinrichtung 62 kann dazu ausgebildet sein, die Position der Fördereinrichtung 6 in Bezug zu dem Kollisionsbereich 60 zu bestimmen. Wie bereits beschreiben ist der Kollisionsbereich 60 ein Bereich, in den sich die Fördereinrichtung 6 nicht bewegen soll. Dieser Bereich kann beispielsweise ein Bereich sein, in dem es zu einer Kollision mit irgendeinem Gegenstand kommen kann. Der Gegenstand kann auch Teil des Gleitschalungsfertigers 1, wie beispielsweise der Maschinenrahmen 2 oder die Fahreinrichtungen 4 sein. Beispielsweise könnte im in den Fign. 5 und 6 dargestellten Ausführungsbeispiel in dem Bewegungsraum 40 z.B. ein Teil der Fahreinrichtung 4 des Gleitschalungsfertigers angeordnet sein.

Die Position der Fördereinrichtung 6 in Bezug zu dem Kollisionsbereich 60 kann z.B. zumindest aufgrund der Verstellposition des ersten 22 und zweiten 34 bestimmbar sein. Falls ein dritter Aktuator 18 und/oder weitere Aktuatoren 24 verwendet werden, können auch die Verstellpositionen dieser Aktuatoren hinzugezogen werden.

Die Steuereinrichtung 62 kann dazu ausgebildet sein, ein Steuersignal 88 auszugeben, sobald festgestellt wird, dass die Fördereinrichtung einen vorgegebenen Abstand zu dem Kollisionsbereichen unterschreitet. Beispielsweise könnte dies der in den Figuren 6 und 7 dargestellte Abstand D sein.

Das Steuersignal 88 kann ein Stoppsignal zum Stoppen zumindest eines der Aktuatoren und/oder ein Steuersignal zur Ausgabe eines akustischen und/oder optischen Warnsignals sein.

Ferner können auch mehrere Stufen vorgesehen sein, so dass bei einer ersten Stufe bei einem bestimmten ersten Abstand D ein Steuersignal ausgegeben werden kann, dass eine Warnung eines akustischen und/oder optischen Signals erzeugt. In einer zweiten Stufe, beispielsweise bei einem zweiten vorgegebenen Abstand E, der vorzugsweise kleiner als der erste vorgegebene Abstand ist, kann dann ein Stoppsignal zum Stoppen des zumindest einen Aktuators ausgegeben werden.

Der Bewegungsraum 40 ist vorzugsweise in Bezug zu dem Maschinenrahmen 2 definierbar und bewegt sich zusammen mit der Fortbewegung des Gleitschalungsfertigers 1 mit dem Gleitschalungsfertiger fort. Beim Fortbewegen des Gleitschalungsfertigers 1 kann sich jedoch auch der Kollisionsbereich 60 innerhalb des Bewegungsraums 40 verändern. Dies kann beispielsweise dadurch geschehen, dass sich die Fahreinrichtung 4 in Bezug zu dem Maschinenrahmen 2 bewegen und ihre Position bezogen auf den Maschinenrahmen 2 ändern. Auch könnten dies beispielsweise dadurch geschehen, dass sich theoretische Kollisionsbereiche, in die die Fördereinrichtung 6 nicht bewegt werden soll, verändern. Theoretische Kollisionsbereiche können beispielsweise Bereiche auf einer Straße sein, wie beispielsweise die Gegenspur, in die sich die Fördereinrichtung 6 nicht bewegen soll. Auch kann es zur Veränderung des Kollisionsbereichs 60 dadurch kommen, dass die Struktur des Maschinenrahmens 2 sich ändern kann. Bei verschiedenen Funktionen des Gleitschalungsfertigers 1 kann der Maschinenrahmen 2 auch unterschiedlich ausgestaltet sein, so dass der Kollisionsbereich auch abhängig von der Funktion des Gleitschalungsfertigers veränderbar ist. Der Kollisionsbereich kann somit zeitlich anpassbar sein.

Der Kollisionsbereich kann auch von dem Bediener z.B. mittels der Eingabeeinrichtung 82 festgelegt werden. Beispielsweise kann auf einer Baustelle ein bestimmter Bereich (z.B. die Gegenfahrbahn oder Hindernisse auf der Fahrbahn) als Kollisionsbereich festgelegt werden. Eine solche Festlegung kann auch über ein "teachin" Verfahren erfolgen. Der Bediener kann beispielsweise Grenzen der Bewegung der Fördereinrichtung 6 festlegen.

In einem Ausführungsbespiel können auch Sensoren 70 vorgesehen sein, die die Position der Fahrwerke und des Maschinenrahmens oder auch Gegenstände erfasst und Signale 86 an die Steuereinrichtung 62 sendet und die Steuereinrichtung 62 davon abhängig einen Kollisionsbereich 60 definiert bzw. einen sich zeitlich ändernden Kollisionsbereich 60 definiert. Es ist dabei entscheidend, dass die Sensordaten zur Bestimmung des Kollisionsbereichs 60 herangezogen werden.

Alternativ kann eine solche Erfassung mit Sensoren 70 einmalig zu Beginn eines Bearbeitungsprozesses erfolgen. Zusätzlich kann dann während des Bearbeitungsprozesses die geänderte Position der Fahreinrichtungen 4 und/oder des Maschinenrahmens 2 durch die geänderten vorgegebenen Steuereingaben, wie Lenkeingaben, angepasst werden.

Als Alternative kann beispielsweise auch zu Beginn eines Bearbeitungsprozesses der Bediener Teile im Bereich des Bedienungsraums definieren, der als Kollisionsbereich definiert sein soll. Die Anpassung des Kollisionsbereichs innerhalb des Bewegungsraums kann dann manuell oder auch automatisch erfolgen.

Der Kollisionsbereich kann auch unabhängig von Maschinenkonfiguration manuell vorgegeben werden, beispielsweise um zu verhindern das Fördereinrichtung auf die Gegenfahrbahn ragt.

## Patentansprüche

1. Gleitschalungsfertiger (1), mit
- zumindest einem Maschinenrahmen (2),
- zumindest drei Fahreinrichtungen (4), die mit dem Maschinenrahmen (2) verbunden sind,
- zumindest einer Fördereinrichtung (6), die mit dem Maschinenrahmen (2) derart verbunden ist, dass die Fördereinrichtung (6) relativ zu dem Maschinenrahmen (2) zumindest um eine horizontale Achse und zumindest um eine vertikale Achse schwenkbar ist,
- zumindest ein erster Aktuator (22), der derart angeordnet und ausgebildet ist, dass die Fördereinrichtung (6) zumindest um die horizontale Achse (19) schwenkbar ist, und
- zumindest ein zweiter Aktuator (24, 34), der derart angeordnet und ausgebildet ist, dass die Fördereinrichtung (6) zumindest um die vertikale Achse (36) schwenkbar ist und
- wobei die Fördereinrichtung (6) mittels zumindest des ersten und zweiten Aktuators (22, 24, 34) in einem in Bezug zu dem Maschinenrahmen (2) definierten Bewegungsraum (40) bewegbar ist,
**dadurch gekennzeichnet,**
**dass** zumindest eine Steuereinrichtung (62) vorgesehen ist, die dazu ausgebildet ist, zumindest einen ersten Kollisionsbereich (60) in dem Bewegungsraum (40) zu definieren,
wobei die Steuereinrichtung (62) ferner dazu ausgebildet ist, die Position der Fördereinrichtung (6) in Bezug zu dem Kollisionsbereich (60) zu bestimmen.

2. Gleitschalungsfertiger nach Anspruch 1, **dadurch gekennzeichnet, dass** zumindest ein dritter Aktuator (18) vorgesehen ist, der derart angeordnet und ausgebildet ist, dass die Fördereinrichtung zumindest in eine erste Richtung (16) translatorisch bewegbar ist, wobei die Fördereinrichtung (6) mittels zumindest des ersten, zweiten und dritten Aktuators (22, 24, 34, 18) in dem in Bezug zu dem Maschinenrahmen (2) definierten Bewegungsraum (40) bewegbar ist,

3. Gleitschalungsfertiger nach Anspruch 1 oder 2, **dadurch gekennzeichnet, dass** die Position der Fördereinrichtung (6) in Bezug zu dem Kollisionsbereich (60) aufgrund der Verstellpositionen der Aktuatoren (22, 24, 36, 18) bestimmbar ist.

4. Gleitschalungsfertiger (1) nach einem der Ansprüche 1 bis 3, **dadurch gekennzeichnet, dass** die Steuereinrichtung (62) dazu ausgebildet ist, ein Steuersignal auszugeben, sobald mittels der Steuereinrichtung (62) festgestellt wird, dass die Fördereinrichtung (6) einen vorgegebenen Abstand (D) zu dem Kollisionsbereich (60) unterschreitet.

5. Gleitschalungsfertiger (1) nach einem der Ansprüche 1 bis 4, **dadurch gekennzeichnet, dass** das Steuersignal ein Stoppsignal zum Stoppen zumindest eines Aktuators (22, 24, 34, 18) und/oder ein Steuersignal zur Ausgabe eines akustisches und/oder eines optischen Warnsignals ist.

6. Gleitschalungsfertiger (1) nach einem der Ansprüche 1 bis 5, **dadurch gekennzeichnet, dass** ein in dem Kollisionsbereich befindliche Gegenstand zumindest ein Teil des Maschinenrahmens (2) und/oder zumindest Teil einer Fahreinrichtung (4) ist.

7. Gleitschalungsfertiger (1) nach einem der Ansprüche 1 bis 6, **dadurch gekennzeichnet, dass** die Steuereinrichtung (62) dazu ausgebildet ist, den in dem Bewegungsraum (40) definierten Kollisionsbereich (60) anzupassen, wobei die Anpassung manuell oder automatisch durchführbar ist.

8. Gleitschalungsfertiger (1) nach Anspruch 7, **dadurch gekennzeichnet, dass** die Steuereinrichtung (62) dazu ausgebildet ist, den Kollisionsbereich (60) dann anzupassen, wenn sich die Position und/oder die Struktur zumindest einer Fahreinrichtung (4) und/oder sich die Struktur des Maschinenrahmens (2) ändert.

9. Gleitschalungsfertiger (1) nach Anspruch 8, **dadurch gekennzeichnet, dass** der Maschinenrahmen (2) derart ausgebildet ist, dass durch Hinzufügen oder Wegnehmen oder veränderte Positionierung von Baugruppen die Struktur des Maschinenrahmens (2) veränderbar ist.

10. Gleitschalungsfertiger (1) nach Anspruch 9, **dadurch gekennzeichnet, dass** in einer Speichereinrichtung (80) gespeichert ist, welche Baugruppen des Maschinenrahmens (2) hinzufügbar bzw. wegnehmbar oder anders positionierbar sind, so dass die verschiedenen Strukturen des Maschinenrahmens (2) in der Speichereinrichtung (63) speicherbar sind, wobei durch Auswahl der unterschiedlichen Strukturen des Maschinenrahmens (2) aus der Speichereinrichtung (63) der Kollisionsbereich (60) anpassbar ist.

11. Gleitschalungsfertiger (1) nach einem der Ansprüche 7 bis 10, **dadurch gekennzeichnet, dass** in der Speichereinrichtung (80) für unterschiedliche Anwendungen des Gleitschalungsfertigers unterschiedliche Kollisionsbereiche gespeichert sind, wobei durch Auswahl der unterschiedlichen Anwendung der Kollisionsbereich (60) anpassbar ist.

12. Gleitschalungsfertiger (1) nach einem der Ansprüche 7 bis 11, **dadurch gekennzeichnet, dass** die Steuereinrichtung (62) dazu ausgebildet ist, die überschneidenden Bereiche von dem Bewegungsraum (40) der Fördereinrichtung (6) und des Raums, den der Maschinenrahmen (2) und die Fahreinrichtungen (4) einnehmen, zu ermitteln und als Kollisionsbereich (60) festzulegen.

13. Verfahren zum Herstellen von Bodenbelägen oder Strukturen mit Hilfe von Gleitschalungsfertiger (1), der zumindest einen Maschinenrahmen (2) aufweist, mit dem zumindest eine Fördereinrichtung (6) verbunden ist, wobei die Fördereinrichtung (6) relativ zu dem Maschinenrahmen (2) zumindest um eine horizontale Achse und zumindest um eine vertikale Achse geschwenkt werden kann,
wobei zumindest ein erster Aktuator (22) die Fördereinrichtung (6) zumindest um die horizontale Achse schwenken kann und
zumindest ein zweiter Aktuator (24, 34) die Fördereinrichtung (6) zumindest um die vertikale Achse schwenken kann,
wobei die Fördereinrichtung (6) mittels zumindest des ersten und zweiten Aktuators (22, 24, 34) in einem in Bezug zu dem Maschinenrahmen (2) definierten Bewegungsraum (40) bewegbar ist,
**dadurch gekennzeichnet,**
**dass** zumindest ein erster Kollisionsbereich (60) mittels einer Steuereinrichtung (62) in dem Bewegungsraum (40) definiert wird,
wobei mittels der Steuereinrichtung (62) die Position der Fördereinrichtung (4) in Bezug zu dem Kollisionsbereich (60) bestimmt wird.

14. Verfahren nach Anspruch 13, **dadurch gekennzeichnet, dass** zumindest ein dritter Aktuator (18) die Fördereinrichtung (6) zumindest in eine erste Richtung (16) translatorisch bewegen kann, wobei die Fördereinrichtung (6) mittels zumindest des ersten, zweiten und dritten Aktuators (22, 24, 34, 18) in dem in Bezug zu dem Maschinenrahmen (2) definierten Bewegungsraum (40) bewegbar ist,

15. Verfahren nach Anspruch 13 oder 14, **dadurch gekennzeichnet, dass** die Position der Fördereinrichtung (6) in Bezug zu dem Kollisionsbereich (60) aufgrund der Verstellposition der Aktuatoren (22, 24, 34, 18) bestimmt wird.

16. Verfahren nach einem der Ansprüche 13 bis 15, **dadurch gekennzeichnet, dass** die Steuereinrichtung (62) ein Steuersignal ausgibt, sobald die Fördereinrichtung (6) einen vorgegebenen Abstand (D) zu dem Kollisionsbereich (60) unterschreitet.

17. Verfahren nach einem der Ansprüche 13 bis 16, **dadurch gekennzeichnet, dass** das Steuersignal ein Stoppsignal zum Stoppen zumindest eines Aktuators (22, 24, 34, 18) und/oder ein Steuersignal zur Ausgabe eines akustisches und/oder eines optischen Warnsignals ist.
